# EUROPÄISCHE PATENTSCHRIFT

(11) **EP 3 580 465 B1**
(45) Veröffentlichungstag und Bekanntmachung des Hinweises auf die Patenterteilung: **21.10.2020**
(21) Anmeldenummer: 18705852.4
(22) Anmeldetag: 06.02.2018
(51) Int. Cl.: F16C 17/18, F16C 17/02, F16C 35/02, F16C 17/10

(54) **GLEITLAGERUNG MIT HYDRODYNAMISCHER AXIALSICHERUNG**
PLAIN BEARING WITH HYDRODYNAMIC AXIAL SECURING
PALIER LISSE À FIXATION AXIALE HYDRODYNAMIQUE

(30) Priorität: 08.02.2017 DE 102017102420
(43) Veröffentlichungstag der Anmeldung: 18.12.2019
(73) Patentinhaber: ABB Schweiz AG, 5400 Baden (CH)
(72) Erfinder: AMMANN, Bruno, 5000 Aarau (CH); KREIENKAMP, Christian, 79713 Bad Säckingen (DE); HERTEL, Antje, 5420 Ehrendingen (CH); ACHTNICH, Philippe, 5610 Wohlen (CH)
(74) Vertreter: Zimmermann & Partner Patentanwälte mbB
(86) Internationale Anmeldenummer: PCT/EP2018/052968
(87) Internationale Veröffentlichungsnummer: WO 2018/146101

(56) Entgegenhaltungen:
- WO-A2-2008/056002
- CN-U- 204 755 000
- DE-C1- 4 002 583
- DE-U1- 8 529 861
- JP-U- H0 495 629

## Beschreibung

### TECHNISCHES GEBIET

Die Erfindung bezieht sich auf das Gebiet der Abgasturbolader für aufgeladene Brennkraftmaschinen. Insbesondere betrifft die Erfindung eine Radiallageranordnung eines Abgasturboladers zur Lagerung einer Welle in einem Lagergehäuse, die eine Sicherung für eine Radialgleitlagerbüchse gegen axiale Verschiebung aufweist.

### TECHNISCHER HINTERGRUND

Turbolader für Grossmotoren werden mit Gleit- oder Wälzlagern ausgeführt. Neuere ABB-Turbolader sind mit hydrodynamischen Gleitlagern ausgestattet, die typischerweise über das Motorschmierölsystem versorgt werden. Dabei werden Lagerteile für die Axiallagerung (Aufnehmen des Verdichter- bzw. Turbinenschubs) und Lagerteile für die Radiallagerung (Führen der Welle und Aufnehmen sowie Dämpfen der Wellenbewegung in radialer Richtung) unterschieden.

Bei Turboladern wirken axiale Kräfte auf das Turbinenrad und auf das Verdichterrad, welche zu einer auf die Welle des Turboladers wirkenden Gesamt-Axialkraft führen. Insbesondere bei Axialturbinen wird diese Gesamt-Axialkraft durch ein Schublager aufgefangen. Das Schublager befindet sich an der Welle des Turboladers zwischen dem Verdichterrad und dem Turbinenrad, und umfasst eine mit der Welle mitrotierende Schublageranordnung und einen ortsfesten Schublagerkörper als Gegenstück zur Schublageranordnung. Das Schublager ist als Gleitlager zwischen der mitrotierenden Schublageranordnung und dem ortsfesten Schublagerkörper realisiert.

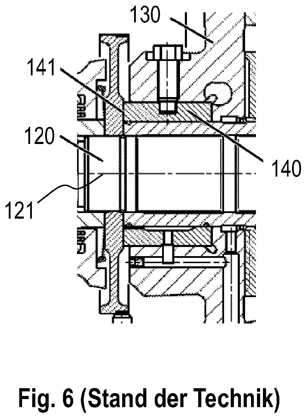

Zur Verbesserung der Dynamik des das Turbinenrad, das Verdichterrad und die Welle sowie mitrotierende Lagerteile umfassenden Rotors des Abgasturboladers werden die Lagerbüchsen der Radiallager oft nicht fest ins Lagergehäuse eingebaut, sondern schwimmend, mit radialem Spiel. Diese Anordnung wird als Quetschöldämpfer bezeichnet. Um ein allfälliges Mitrotieren der Lagerbüchse mit der darin gelagerten Welle zu verhindern, wird eine Positionierung benötigt, welche aber eine Bewegung im radialen Spiel ermöglicht. Diese Positionierung wird in herkömmlichen Abgasturboladern beispielsweise durch ins Lagergehäuse geschraubte Stiftschrauben und entsprechende Bohrungen in der Radiallagerbüchse realisiert. Fig. 6 zeigt eine derartige Anordnung gemäss dem Stand der Technik, wie sie verbreitet verwendet werden. Die Stirnseiten der Radiallagerbüchsen können als Axiallager ausgebildet sein. Im Beispiel gemäß Fig. 6 ist das Hilfs-Axiallager in die Radiallagerbüchse integriert. Das Hilfs-Axiallager nimmt die Kräfte entgegen der Hauptschubrichtung auf. Die Kraft von der optional profiliert ausgebildeten Hilfslagerfläche wird an der gegenüberliegenden Stirnseite der Radiallagerbüchse auf das Lagergehäuse übertragen.

Die Radialgleitlagerteile sind demnach in der Regel gegen axiales Verschieben gesichert, um Ihre Funktion sicher erfüllen zu können. Dies erfolgt z.B. über einen Anschlag im Gehäuse oder über dedizierte Sicherungselemente, z.B. Sicherungsringe oder radiale Sicherungsschrauben, welche auch gleichzeitig als Verdrehsicherung funktionieren. CN 204 755 000 U offenbart die Merkmale des Oberbegriffs von Anspruch 1.

### DARSTELLUNG DES TECHNISCHEN PROBLEMS

Die aus dem Stand der Technik bekannten Radiallager mit einer axialen Sicherung weisen gewisse Nachteile hinsichtlich deren Montage und Kosten auf. Daher liegt der vorliegenden Erfindung die Aufgabe zu Grunde eine Radiallager mit einer axialen Sicherung bereitzustellen, die in dieser Hinsicht verbessert ist, d.h. ein möglichst kostengünstiges und montagefreundliches Design aufweist. Insbesondere ist es bei modernen Design mit ins das Lagergehäuse integrierter Aufnahme der Radiallager aufgrund der fehlenden Zugänglichkeit nicht möglich, radiale Sicherungselemente zu montieren. Um die axiale Baulänge des Turboladers zu minimieren und den zur Verfügung stehenden Bauraum optimal zu nutzen, ist es vorteilhaft, auf axiale Sicherungselemente wie Sicherungsringe zu verzichten. Ein axiales Verschieben der Gleitlager soll trotz Verzicht auf mechanische Sicherungselemente vermieden werden.

### ZUSAMMENFASSUNG DER ERFINDUNG

Zur Lösung des obengenannten Problems wird eine Radiallageranordnung gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Radiallageranordnung eines Abgasturboladers zur Lagerung einer Welle in einem Lagergehäuse bereitgestellt. Die Radiallageranordnung umfasst eine zwischen der Welle und dem Lagergehäuse angeordnete Radiallagerbüchse. Die Radiallagerbüchse weist einen radial nach außen abstehenden Bund auf, welcher in axialer Richtung mit einem Axialanschlag am Lagergehäuse zusammenwirkt. Die Geometrie des radial nach außen abstehenden Bundes der Radiallagerbüchse ist durch Aussparungen unterbrochen, so dass eine durch einen Ölzuführdruck wirkende Kraft auf den Bund minimiert wird, wobei die Radiallagerbüchse derart konfiguriert ist, dass zwischen einer Stirnfläche der Radiallagerbüchse und einem auf der Welle angeordnetem Gegenstück, insbesondere einem rotierenden Gegenstück, ein Schmierfilm ausbildbar ist. Dabei können sowohl die Stirnfläche der Radiallagerbüchse wie auch das rotierende Gegenstück ohne eine Profilierung wie auch mit Profilierung ausgeführt werden. Mit Vorteil wird auf eine Profilierung verzichtet, wenn das notwendige Niveau der hydrodynamischen Rückstellkraft auch ohne Profilierung erreicht werden kann

Somit wird durch die erfindungsgemäße Radiallageranordnung, eine Radiallageranordnung bereitgestellt, bei welcher die Radiallagerbüchse vorteilshafterweise nicht mittels eines mechanischen Elements gegen axiale Verschiebung gesichert werden muss, wie dies im Stand der Technik üblich ist. Stattdessen wird die Geometrie der Radiallagerbüchse sowie die Abstände zu den benachbarten Bauteilen Teilen so ausgelegt, dass sich aufgrund der Öldruckverteilung rund um die Radiallagerbüchse eine definierte Kraftverteilung ergibt, die dafür sorgt, dass sich die Radiallagerbüchse nicht unkontrolliert aus Ihrer Soll-Position entfernen kann und nicht in Kontakt mit rotierenden Teilen kommt, was zum Verschleiß führen könnte. Gemäß den hierin beschrieben Ausführungsformen der Erfindung wird dies rein durch die Wechselwirkung zwischen Ölversorgungsdruck und hydrodynamischer Lagerkraft erreicht, ohne dass mechanische Anschläge oder Sicherungselemente zum Einsatz kommen. Demnach weist die erfindungsgemäße Radiallageranordnung vorteilhafterweise ein kostengünstiges und montagefreundliches Design auf, welches eine definierte Axialposition der Radiallagerbüchse sicherstellt, und ohne zusätzliche Bauteile und zusätzlichen Bauraum auskommt.

Gemäß einem weiteren Aspekt der Erfindung wird ein Abgasturbolader mit einer Radiallageranordnung gemäß einer der hierin beschrieben Ausführungsformen zur Lagerung einer Welle in einem Lagergehäuse bereitgestellt, so dass vorteilhafterweise ein verbesserter Abgasturbolader bereitgestellt werden kann.

Ein weiterer Aspekt der Erfindung betrifft eine Verwendung einer Radiallageranordnung gemäß einer der hierin beschrieben Ausführungsformen für einen Turbolader derart, dass sich zwischen einem auf einer Welle rotationsfest angeordnetem Gegenstück, beispielsweise einem Schubring, und einer Stirnfläche der Radiallagerbüchse ein Schmierfilm bildet, welcher die Radiallagerbüchse in axialer Richtung in Richtung des am Lagergehäuse angeordneten Axialanschlags drückt.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Fig. 1: eine schematische Querschnittsansicht eines Ausschnitts eines Turbolader mit einer Radiallageranordnung gemäß hierin beschriebenen Ausführungsformen;
- Fig. 2: eine detaillierte Ansicht der schematischen Querschnittsansicht von Fig. 1;
- Fig. 3: eine isometrische Ansicht einer Radiallagerbüchse einer Radiallageranordnung gemäß hierin beschriebenen Ausführungsformen;
- Fig. 4: eine Frontansicht einer Radiallagerbüchse einer Radiallageranordnung gemäß hierin beschriebenen Ausführungsformen; und
- Fig. 5: ein Diagramm in welchem die axial wirkenden Kräfte für eine beispielhafte Radiallageranordnung gemäß hierin beschriebenen Ausführungsformen; und
- Fig. 6: eine Schnittansicht durch ein Radiallager nach dem Stand der Technik mit einer mittels Positionierstift gesicherten Radiallagerbüchse.

### DETAILLIERTE BESCHREIBUNG DER FIGUREN

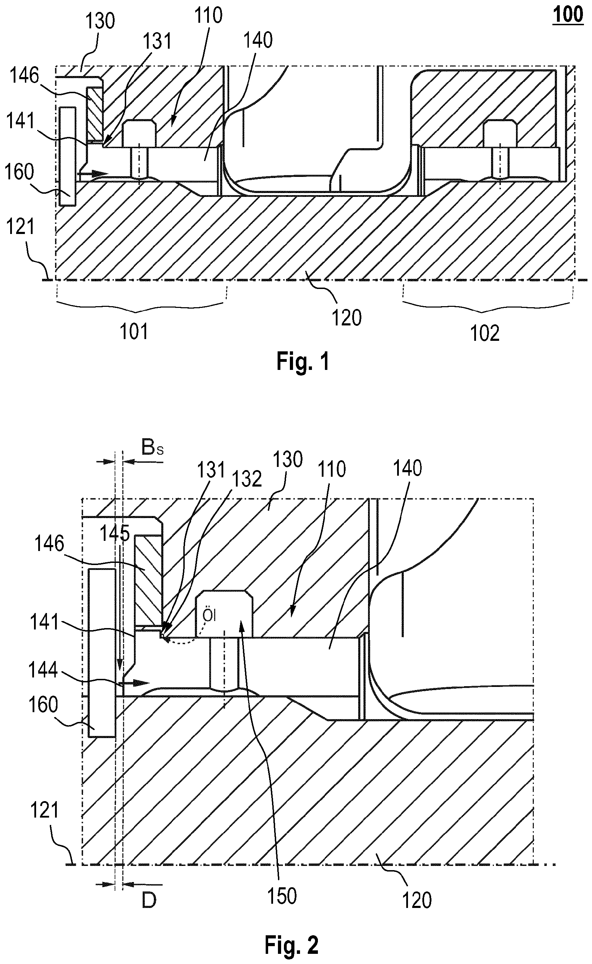

In Fig. 1 ist eine schematische Querschnittsansicht eines Ausschnitts eines Turboladers 100 mit einer Radiallageranordnung 110 gemäß hierin beschriebenen Ausführungsformen dargestellt. Insbesondere zeigt Fig. 1 eine Radiallageranordnung 110 eines Abgasturboladers 100 zur Lagerung einer Welle 120 in einem Lagergehäuse 130. Wie in Fig. 1 dargestellt ist, umfasst die Radiallageranordnung 110 gemäß der vorliegenden Erfindung eine zwischen der Welle 120 und dem Lagergehäuse 130 angeordnete Radiallagerbüchse 140. Die Radiallagerbüchse 140 weist einen radial nach außen abstehenden Bund 141 aufweist, welcher in axialer Richtung mit einem Axialanschlag 131 am Lagergehäuse 130 zusammenwirkt. Typischerweise wird bei der Montage die Radiallagerbüchse (im folgenden auch Gleitlagerbüchse GLB genannt) axial in das Lagergehäuse eingeschoben bis der radial nach außen abstehenden Bund 141 der Radiallagerbüchse 140 am Lagergehäuse 130 anschlägt. Insbesondere kann die Radiallagerbüchse 140 derart im Lagergehäuse 130 montiert sein, dass die Radiallagerbüchse 140 relativ zu einer gelagerten sich drehenden Welle 120 statisch ist, d.h. sich nicht mitdreht.

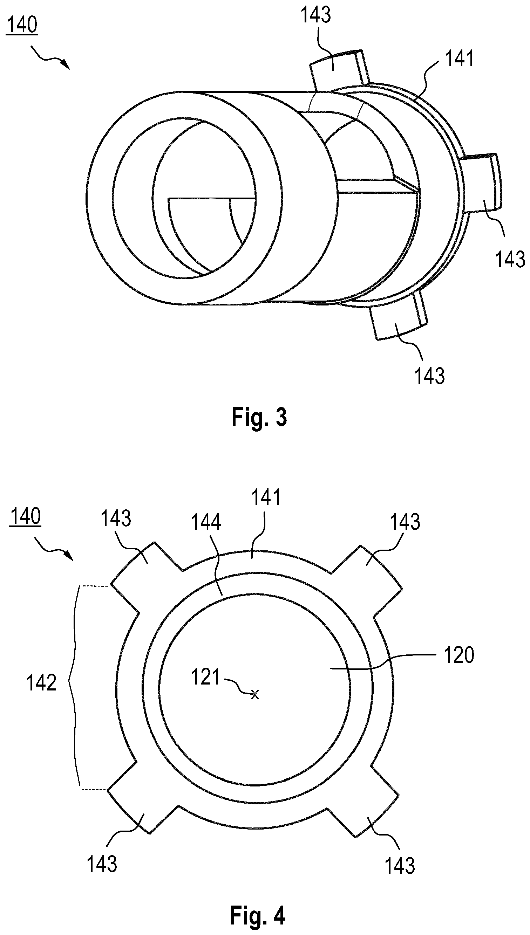

Wie in Fig. 1 dargestellt ist, ist die Welle 120 im Radiallager drehbar gelagert ist. In dem Lagergehäuse 130, welches bei Abgasturboladern typischerweise zwischen dem Verdichter und der Turbine angeordnet ist, ist die Radiallagerbüchse 140 mit geringem radialem Spiel eingesetzt. Zwischen dem Lagergehäuse und dem äußeren Umfang der Radiallagerbüchse ist ein mit Öl versorgter Schmierspalt angeordnet. Zur Sicherstellung der Ölversorgung entlang des Umfangs der Radiallagerbüchse ist ein umlaufender Ölversorgungskanal vorgesehen. Zur Montage wird die Radiallagerbüchse 140 in der dargestellten Ausführungsform von links in die Öffnung im Lagergehäuse eingesetzt. Dank des in radialer Richtung vorstehenden, umlaufenden Bundes (Kragen) 141 ist die axiale Verschiebbarkeit in die Einsetzrichtung begrenzt. Ferner kann ein am Lagergehäuse befestigtes Blech 146 vorgesehen sein, welches mittels Formschluss gegenüber den Nocken 143 (siehe Figur 3) eine Verdrehsicherung der Radiallagerbüchse sicherstellt.

Wie beispielsweise in den Figuren 3 und 4 gezeigt ist, ist die Geometrie des radial nach außen abstehenden Bundes 141 der Radiallagerbüchse 140 durch Aussparungen 142 unterbrochen. Durch diese Aussparungen kann Öl abfließen, so dass durch die Aussparungen 142 eine durch einen Ölzuführdruck wirkende Kraft auf den Bund 141 minimiert werden kann. Beispielsweise kann mit dem Design der Radiallagerbüchse 140, wie sie in den Figuren 3 und 4 dargestellt ist bei einer Spaltbreite von 0.3 mm des radialen Spiels zwischen Radiallagerbüchse und Lagergehäuse, die durch einen Ölzuführdruck wirkende Kraft F auf F = 26.8 N reduziert werden.

Wie aus den Figuren 1 und 2 hervorgehet, ist die Radiallagerbüchse 140 derart konfiguriert und auf der Welle 120 angeordnet, dass zwischen einer Stirnfläche 144 der Radiallagerbüchse 140 und einem auf der Welle 120 angeordnetem Gegenstück 160, beispielswiese ein Schubring, ein Schmierfilm ausbildbar ist. Dieser Schmierfilm wird aus dem Radiallagerspalt, welcher zwischen der Radiallagerbüchse 140 und der Welle 120 ausgebildet ist, mit Öl versorgt.

Somit wird durch die erfindungsgemäße Radiallageranordnung, eine Radiallageranordnung bereitgestellt, bei welcher die Radiallagerbüchse vorteilshafterweise nicht mittels eines mechanischen Elements gegen axiale Verschiebung gesichert werden muss, wie dies im Stand der Technik üblich ist. Stattdessen wird die Geometrie der Radiallagerbüchse sowie die Abstände zu den benachbarten Bauteilen Teilen so ausgelegt, dass sich aufgrund der Öldruckverteilung rund um die Radiallagerbüchse eine definierte Kraftverteilung ergibt, die dafür sorgt, dass sich die Radiallagerbüchse nicht unkontrolliert aus Ihrer Soll-Position entfernen kann und nicht in Kontakt mit rotierenden Teilen kommt, was zum Verschleiß führen könnte. Gemäß den hierin beschrieben Ausführungsformen der Erfindung wird dies rein durch Öldruck erreicht, ohne dass mechanische Anschläge oder Sicherungselemente zum Einsatz kommen.

Wie aus den hierin beschriebenen Ausführungsformen hervorgeht ist die erfindungsgemäße Radiallageranordnung vorteilhafterweise so ausgelegt, dass ein Schmierfilm zwischen dem Gegenstück 160, beispielsweise einem Schubring, und der Radiallagerbüchse 140 ausbildbar ist, der einer axialen Verschiebung der Radiallagerbüchse 140 in Richtung der Verdichterseite 101 entgegenwirkt. Dies ist beispielhaft in den Figuren 1 und 2 durch einen Pfeil dargestellt der von der Verdichterseite 101 zur Turbinenseite 102 zeigt. Demnach weist die erfindungsgemäße Radiallageranordnung vorteilhafterweise ein kostengünstiges und montagefreundliches Design auf, welches eine definierte Axialposition der Radiallagerbüchse sicherstellt, und ohne zusätzliche Bauteile und zusätzlichen Bauraum auskommt.

Demnach weist die Radiallageranordnung gemäß den hierein beschriebenen Ausführungsformen deutlich geringere Axialkräfte auf als aus dem Stand der Technik bekannte Designs. Insbesondere sei angemerkt, dass je grösser der Axialspalt zwischen GLB und Lagergehäuse wird, desto geringer wird die Druckkraft auf die GLB, welche die GLB vom Axialanschlag 131 des Lagergehäuses 130 wegdrückt (in den Figuren 1 und 2 nach links).

Zwischen dem rotierenden Gegenstück 160, beispielsweise einem Schubring, und der Stirnfläche der GLB bildet sich ein Schmierfilm aus. Je stärker die GLB vom Ölzufuhrdruck hinter dem Anschlagkragen nach links gedrückt wird (Figuren 1 und 2), umso kleiner wird der Spalt 145 zwischen Gegenstück und GLB, insbesondere der Stirnfläche 144 der Radiallagerbüchse 140. Je kleiner der Spalt 145 wird, umso grösser wird die Rückstellkraft des Schmierfilm zwischen Gegenstück und GLB, welche die GLB zurück nach rechts drückt (siehe Pfeil in den Figuren 1 und 2). Es stellt sich ein Kräftegleichgewicht ein, worüber die Axialverschiebung der GLB limitiert wird und ein Kontakt mit dem rotierenden Gegenstück im Betrieb vermieden wird.

Gemäß einer weiteren Ausführungsform die mit anderen hierin beschriebenen Ausführungsformen kombiniert werden kann, ist die Geometrie des nach außen abstehenden Bundes 141 der Radiallagerbüchse 140 durch Aussparungen 142 derart unterbrochen, dass vier Nocken 143 gebildet werden zwischen welchen Öl abfließen kann, wie es beispielhaft in den Figuren 3 und 4 gezeigt ist. Alternativ kann die Geometrie des nach außen stehenden Bundes 141 durch Aussparungen auch derart unterbrochen sein, dass weniger oder mehr als vier Nocken gebildet werden, beispielsweise 2, 3, 5, 6, 7, 8 oder mehr Nocken. Wie es beispielhaft in Figur 4 gezeigt ist. können die Nocken 143 (z.B. die dargestellten vier Nocken) im Wesentlichen rotationssymmetrisch zur Rotationsachse 121 der Welle 120 angeordnet sein. Die Nocken können beispielsweise dazu dienen eine Verdrehsicherung der Radiallagerbüchse gegenüber dem Lagergehäuse bereitzustellen, beispielsweise mittels des am Lagergehäuse befestigten Blechs 146 wie oben beschrieben. Beispielsweise kann die Radiallageranordnung so ausgeführt sein, dass sich zwischen den Nocken und dem Lagergehäuse ein Formschluss realisiert wird.

Wie es beispielhaft in der isometrischen Ansicht der Radiallagerbüchse 140 in Figur 3 dargestellt ist, kann die Radiallagerbüchse mit dem radial nach außen abstehenden Bund 141 einstückig als integrales Bauteil ausgeführt sein. Dies trägt dazu bei, dass die Radiallageanordnung gemäß den hierin beschriebenen Ausführungsformen mit möglichst wenigen Bauteilen realisiert werden kann.

Gemäß einer weiteren Ausführungsform die mit anderen hierin beschriebenen Ausführungsformen kombiniert werden kann, ist zwischen dem radial nach außen abstehenden Bund 141 und dem Lagergehäuse 130 ein Spalt 132 vorgesehen, der ausgebildet ist um Öl von einer Ölversorgung 150 auszunehmen, wie es beispielhaft in Fig. 2 dargestellt ist. Typischerweise ist der Spalt 132 radial umlaufend als Ölversorgungsspalt ausgebildet.

Wie in Fig. 2 gezeigt ist, weist die Radiallageranordnung 110 ferner ein Gegenstück 160 auf, das auf der Welle in einem Abstand D zu einer axialen Stirnfläche 144 der Radiallagerbüchse 140 rotationfest angeordnet ist, so dass zwischen dem Gegenstück 160, beispielsweise einem Schubring, und er axialen Stirnfläche 144 der Radiallagerbüchse 140 ein Spalt 145 gebildet wird. Vorzugsweise wird der Spalt 145 zwischen Gegenstück 160 und Radiallagerbüchse 140 klein genug gewählt, dass es schon bei geringer Axialverschiebung (d.h. parallel zur Rotationsachse 121 der gelagerten Welle 120) der Radiallagerbüchse zu einer Schmierfilmbildung zwischen Gegenstück 160 und Radiallagerbüchse 140, insbesondere der Stirnfläche 144 der Radiallagerbüchse 140, kommt.

Typischerweise ist der Abstand D so gewählt, dass der Spalt 145 eine Spaltbreite Bs von 1 mm oder geringer aufweist (Bs ≤ 1 mm). Beispielsweise kann die Spaltbreite Bs = 0.55 mm oder geringer (Bs ≤ 0.55 mm), insbesondere Bs = 0.3 mm oder geringer (Bs ≤ 0.3 mm), insbesondere Bs = 0.1 mm oder geringer (Bs ≤ 0.1 mm), beispielsweise Bs ≤ 0.05 mm, sein.

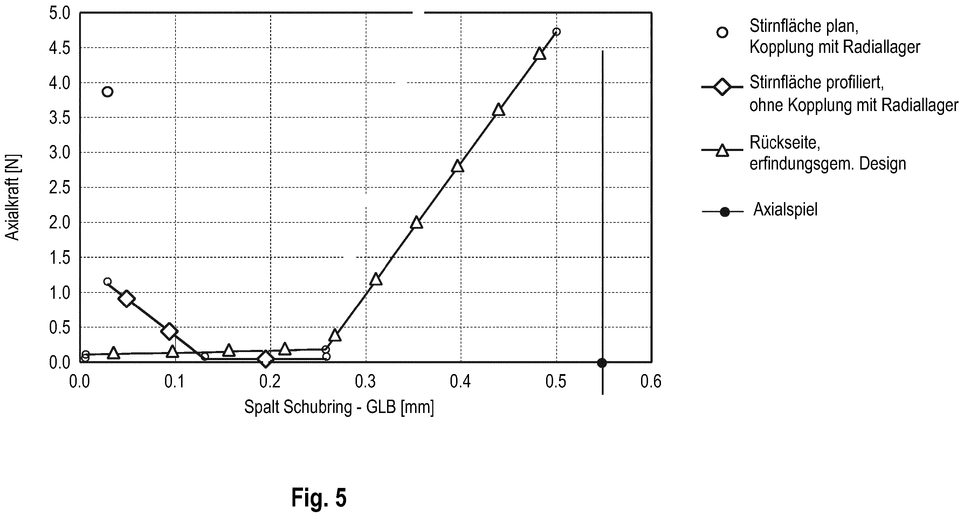

Fig. 5 zeigt ein Diagramm in welchem die axial wirkenden Kräfte für eine beispielhafte Radiallageranordnung gemäß hierin beschriebenen Ausführungsformen dargestellt sind. Im Einzelnen zeigt Fig. 5 die Axialkraft auf die Stirnfläche der Radiallagerbüchse sowie die Axialkraft auf die Rückseite der Radiallagerbüchse (insbesondere auf die Rückseite des Kragens der GLB) als Funktion des Spaltes zwischen Gegenstück und Stirnfläche der Radiallagerbüchse für unterschiedliche Konfigurationen der Radiallagerbüchse. Die Berechnungen wurden bei einer Öltemperatur von T_{Öl} = 65°C und bei einer Drehzahl von 142 rps (rounds per second) durchgeführt.

Wie aus Figur 5 hervorgeht kann mit dem erfindungsgemäßen Design der Radiallagerbüchse 140 die durch einen Ölzuführdruck wirkende Kraft F, d.h. die auf die Rückseite des Kragens (radial nach außen abstehenden Bund) der GLB wirkende Kraft reduziert werden.

### BEZUGZEICHENLISTE

- 100: Turbolader
- 101: Verdichterseite
- 102: Turbinenseite
- 110: Radiallageranordnung
- 120: Welle
- 121: Rotationsachse der Welle
- 130: Lagergehäuse
- 131: Axialanschlag
- 132: Spalt
- 140: Radiallagerbüchse
- 141: Bund der Radiallagerbüchse
- 142: Aussparungen
- 143: Nocken
- 144: Stirnfläche
- 145: Spalt
- 150: Ölversorgung

## Patentansprüche

1. Eine Radiallageranordnung (110) eines Abgasturboladers (100) zur Lagerung einer Welle (120) in einem Lagergehäuse (130), umfassend eine zwischen der Welle (120) und dem Lagergehäuse (130) angeordnete Radiallagerbüchse (140), wobei die Radiallagerbüchse (140) einen radial nach außen abstehenden Bund (141) aufweist, welcher in axialer Richtung mit einem Axialanschlag (131) am Lagergehäuse (130) zusammenwirkt, **dadurch gekennzeichnet, dass** die Geometrie des Bundes (141) durch Aussparungen (142) unterbrochen ist, so dass eine durch einen Ölzuführdruck wirkende Kraft auf den Bund (141) minimiert wird, und wobei die Radiallagerbüchse (140) derart konfiguriert ist, dass zwischen einer Stirnfläche (144) der Radiallagerbüchse (140) und einem auf der Welle (120) angeordnetem Gegenstück (160) ein Schmierfilm ausbildbar ist.

2. Die Radiallageranordnung (110) nach Anspruch 1, wobei die Geometrie des Bundes (141) durch Aussparungen (142) derart unterbrochen ist, dass vier Nocken (143) gebildet werden zwischen welchen Öl abfließen kann.

3. Die Radiallageranordnung (110) nach Anspruch 2, wobei die vier Nocken (143) im Wesentlichen rotationssymmetrisch zur Rotationsachse (121) der Welle (120) angeordnet sind.

4. Die Radiallageranordnung (110) nach einem der Ansprüche 1 bis 3, wobei die Radiallagerbüchse mit dem Bund (141) einstückig als integrales Bauteil ausgeführt ist.

5. Die Radiallageranordnung (110) nach einem der Ansprüche 1 bis 4, wobei zwischen dem radial nach außen abstehenden Bund (141) und dem Lagergehäuse (130) ein Spalt (132) vorgesehen ist, der ausgebildet ist um Öl von einer Ölversorgung (150) auszunehmen.

6. Die Radiallageranordnung (110) einem der Ansprüche 1 bis 5, wobei die Radiallageranordnung ferner ein Gegenstück (160), insbesondere einen Schubring (160), aufweist, das auf der Welle in einem Abstand D zu einer axialen Stirnfläche (144) der Radiallagerbüchse (140) rotationfest angeordnet ist, so dass zwischen dem Gegenstück (160) und er axialen Stirnfläche (144) der Radiallagerbüchse (140) ein Spalt (145) gebildet wird.

7. Die Radiallageranordnung (110) nach Anspruch 6, wobei der Abstand D so gewählt ist, dass der Spalt (145) eine Spaltbreite Bₛ von Bₛ ≤ 1 mm aufweist.

8. Die Radiallageranordnung (110) nach Anspruch 6, wobei die Spaltbreite Bₛ ≤ 0.55 mm beträgt; insbesondere Bₛ ≤ 0.3 mm beträgt; insbesondere Bₛ ≤ 0.1 mm beträgt.

9. Abgasturbolader, umfassend eine Radiallageranordnung (110) gemäß einem der Ansprüche 1 bis 8 zur Lagerung einer Welle (120) in einem Lagergehäuse (130).

10. Verwendung der Radiallageranordnung (110) nach einem der Ansprüche 1 bis 8 für einen Turbolader derart, dass sich zwischen einem auf einer Welle (120) rotationsfest angeordnetem Gegenstück (160) und einer Stirnfläche (144) der Radiallagerbüchse (140) ein Schmierfilm bildet, welcher die Radiallagerbüchse (140) in axialer Richtung in Richtung des am Lagergehäuse (130) angeordneten Axialanschlags (131) drückt.

## Claims

1. Radial bearing arrangement (110) of an exhaust gas turbocharger (100) for mounting a shaft (120) in a bearing housing (130), comprising a radial bearing bush (140) arranged between the shaft (120) and the bearing housing (130), wherein the radial bearing bush (140) features a radially outwardly projecting collar (141), which interacts in the axial direction with an axial stop (131) on the bearing housing (130), **characterized in that** the geometry of the collar (141) is interrupted by cut-outs (142), such that a force acting on the collar (141) as a result of an oil feed pressure is minimized, and wherein the radial bearing bush (140) is configured such that a lubricating film can form between an end surface (144) of the radial bearing bush (140) and a counter piece (160) arranged on the shaft (120).

2. Radial bearing arrangement (110) according to Claim 1, wherein the geometry of the collar (141) is interrupted by cut-outs (142) such that four cams (143) are formed between which oil can flow off.

3. Radial bearing arrangement (110) according to Claim 2, wherein the four cams (143) are arranged essentially rotationally symmetrically with respect to the axis of rotation (121) of the shaft (120).

4. Radial bearing arrangement (110) according to any one of Claims 1 to 3, wherein the radial bearing bush with the collar (141) is configured as a single piece as an integral component.

5. Radial bearing arrangement (110) according to any one of Claims 1 to 4, wherein a gap (132) is provided between the radially outwardly projecting collar (141) and the bearing housing (130), which gap is designed to remove oil from an oil supply (150).

6. Radial bearing arrangement (110) according to any one of Claims 1 to 5, wherein the radial bearing arrangement further features a counter piece (160), in particular a thrust ring (160), which is arranged fixedly in terms of rotation on the shaft at a distance D from an axial end surface (144) of the radial bearing bush (140), such that a gap (145) is formed between the counter piece (160) and the axial end surface (144) of the radial bearing bush (140).

7. Radial bearing arrangement (110) according to Claim 6, wherein the distance D is selected so that the gap (145) has a gap width Bₛ of Bₛ ≤ 1 mm.

8. Radial bearing arrangement (110) according to Claim 6, wherein the gap width is Bₛ ≤ 0.55 mm; in particular is Bₛ ≤ 0.3 mm; in particular is Bₛ ≤ 0.1 mm.

9. Exhaust gas turbocharger, comprising a radial bearing arrangement (110) according to any one of Claims 1 to 8 for mounting a shaft (120) in a bearing housing (130).

10. Use of the radial bearing arrangement (110) according to any one of Claims 1 to 8 for a turbocharger such that a lubricating film forms between a counter piece (160) arranged fixedly in terms of rotation on a shaft (120) and an end surface (144) of the radial bearing bush (140), which lubricating film pushes the radial bearing bush (140) in the axial direction toward the axial stop (131) arranged on the bearing housing (130).

## Revendications

1. Ensemble de palier radial (110) d'un turbocompresseur à gaz d'échappement (100) servant à supporter un arbre (120) dans un logement de palier (130), comportant un coussinet de palier radial (140) disposé entre l'arbre (120) et le logement de palier (130), dans lequel le coussinet de palier radial (140) comprend un épaulement (141) faisant saillie radialement vers l'extérieur, lequel coopère avec une butée axiale (131) sur le logement de palier (130) dans la direction axiale, **caractérisé en ce que** la géométrie de l'épaulement (141) est interrompue par des évidements (142), de sorte qu'une force agissant sur l'épaulement (141) par le biais d'une pression d'amenée d'huile est réduite au minimum, et le coussinet de palier radial (140) étant configuré de telle sorte qu'un film lubrifiant peut être formé entre une surface frontale (144) du coussinet de palier radial (140) et une pièce complémentaire (160) disposée sur l'arbre (120) .

2. Ensemble de palier radial (110) selon la revendication 1, dans lequel la géométrie de l'épaulement (141) est interrompue par des évidements (142) de telle sorte que quatre ergots (143) sont formés, entre lesquels de l'huile peut s'écouler.

3. Ensemble de palier radial (110) selon la revendication 2, dans lequel les quatre ergots (143) sont disposés sensiblement suivant une symétrie de révolution par rapport à l'axe de rotation (121) de l'arbre (120).

4. Ensemble de palier radial (110) selon l'une des revendications 1 à 3, dans lequel le coussinet de palier radial est réalisé d'une seule pièce avec l'épaulement (141) en tant que composant intégré.

5. Ensemble de palier radial (110) selon l'une des revendications 1 à 4, dans lequel une fente (132) est prévue entre l'épaulement (141) faisant saillie radialement vers l'extérieur et le logement de palier (130), laquelle fente est formée de manière à recevoir de l'huile provenant d'une alimentation en huile (150).

6. Ensemble de palier radial (110) selon l'une des revendications 1 à 5, l'ensemble de palier radial comprenant en outre une pièce complémentaire (160), en particulier une bague de poussée (160), qui est disposée de manière solidaire en rotation sur l'arbre à une distance D d'une surface frontale axiale (144) du coussinet de palier radial (140), de sorte qu'une fente (145) est formée entre la pièce complémentaire (160) et la surface frontale axiale (144) du coussinet de palier radial (140).

7. Ensemble de palier radial (110) selon la revendication 6, dans lequel la distance D est sélectionnée de telle sorte que la fente (145) présente une largeur de fente Bₛ telle que Bₛ ≤ 1 mm.

8. Ensemble de palier radial (110) selon la revendication 6, dans lequel la largeur de fente est telle que Bₛ ≤ 0,55 mm ; en particulier Bₛ ≤ 0,3 mm ; en particulier Bₛ ≤ 0,1 mm.

9. Turbocompresseur, comportant un ensemble de palier radial (110) selon l'une des revendications 1 à 8 pour supporter un arbre (120) dans un logement de palier (130).

10. Utilisation de l'ensemble de palier radial (110) selon l'une des revendications 1 à 8 pour un turbocompresseur de telle sorte qu'un film lubrifiant se forme entre une pièce complémentaire (160) disposée de manière solidaire en rotation sur un arbre (120) et une surface frontale (144) du coussinet de palier radial (140), lequel film pousse le coussinet de palier radial (140) dans la direction axiale en direction de la butée axiale (131) disposée sur le logement de palier (130).
